**Europäisches Patentamt**

**European Patent Office**

**Office européen des brevets**

(19)

(11) Veröffentlichungsnummer: **0 075 245**
**B1**

(12) **EUROPÄISCHE PATENTSCHRIFT**

(45) Veröffentlichungstag der Patentschrift:
**08.04.87**

(51) Int. Cl.⁴: **B 07 B 4/02,** B 03 B 9/06

(21) Anmeldenummer: **82108452.2**

(22) Anmeldetag: **14.09.82**

(54) **Vorrichtung zum Sichten von Hausmüll.**

(30) Priorität: **17.09.81 DE 3136992**

(43) Veröffentlichungstag der Anmeldung:
**30.03.83 Patentblatt 83/13**

(45) Bekanntmachung des Hinweises auf die Patenterteilung:
**08.04.87 Patentblatt 87/15**

(84) Benannte Vertragsstaaten:
**AT BE CH DE FR GB IT LI LU NL SE**

(56) Entgegenhaltungen:
**DE-C-885 192**
**DE-U-1 926 054**
**FR-A-1 431 376**
**GB-A-715 176**
**US-A-3 833 117**
**US-A-4 010 097**

(73) Patentinhaber: **MANNESMANN VEBA UMWELTTECHNIK GMBH, Südstrasse 41, D-4690 Herne 2 (DE)**

(72) Erfinder: **Sonnenschein, Hans, Hatzperbogen 48, D-4300 Essen (DE)**
Erfinder: **Skaletz, Heinz, Kölner Strasse 116, D-4350 Recklinghausen (DE)**

(74) Vertreter: **Meissner, Peter E., Dipl.- Ing., Patentanwälte Dipl.- Ing. Peter E. Meissner Dipl.- Ing. Hans- Joachim Presting Herbertstrasse 22, D-1000 Berlin 33 (DE)**

## Beschreibung

Die Erfindung befrifft eine Vorrichtung zum Sichten von Hausmüll nach dem Oberbegriff des Anspruchs 1. Ein nach der US-A- 3 833 117 bekannter Sichter für Hausmüll dieser Art ist mit einem zylindrischen vertikalen Gebläseluftkanal versehen, der an seinem unteren Ende eine, den Sichtlufteinlaß bildende Schwergutaustragungsöffnung und an seinem oberen Ende eine zu einer Absaugvorrichtung führenden Leichtgutaustragungsöffnung sowie dazwischen einen, über einen zentral angeordneten stumpfwinkligen Verteilkegel ausmündenden Mülleintritt besitzt. Obwohl zusätzlich zwischen Mülleintrittsöffnung und Verteilerkegel Einrichtungen zur Zerkleinerung von Müllklumpen vorgesehen sind, wird durch eine derartige Vorrichtung nur eine unbefriedinende Sichtung des Hausmülls erreicht. Kleinkörniges Schwergut, wie Steinchen oder Glassplitter, das auf großflächigem flugfähigem Material aufliegt bzw. anhaftet, wird mit dem Luftstrom zum Leichtgutaustrag transportiert. Das mit diesen Feininertanteilen belastete Leichtgut führt bei dessen Weiterverarbeitung zu stärkerem Verschleiß der Aggregate und erhöht den Ascheanteil, wenn das Leichtgut zu Brennstoff aufbereitet wird.

Der geschilderte Mangel wird auch in einer anderen Vorrichtung zum Windsichten von Hausmüll nicht vollständig behoben, die mit geringeren Luftgeschwindigkeiten arbeitet, wobei die Sichtung in einem Fluidbett erfolgt. Dieses wird dadurch erzeugt, daß der zu sichtende Müll auf ein feinmaschiges vibrierendes Sieb aufgegeben wird, das von unten von Luft angeströmt wird. Die Erfahrungen mit diesem Sichtertyp zeigen, daß die klebenden und fetthaltigen Bestandteile des Hausmülls in sehr kurzer Zeit das Sieb verstopfen, so daß das Fluidbett zusammenbricht und eine Trennung in Leicht- und Schwerfraktion nicht mehr stattfindet.

Die Erfindung hat sich die Aufgabe gestellt, einen Sichter der eingangs bezeichneten Art zu schaffen, dessen Leichtgutaustrag weniger Schwerstoffkörnchen aufweist und der die mechanischen Probleme eines Fluidsichters vermeidet. Diese Aufgabe wird mit den Merkmalen des kennzeichnenden Teils von Anspruch 1 gelöst.

Durch das Zusammenwirken des durch die Schwergutaustragsöffnung angesaugten Luftstromes mit dem durch die seitlichen Einlaßöffnungen angesaugten Luftstrom bildet sich unterhalb des Verteilkegels ein Wirbelzentrum aus, in dem feinkörniges Schwergut, das an Leichtgut haftet, bzw. diesem aufliegt, vom Leichtgut entfernt wird und mit dem übrigen Schwergut zur Schwergutaustragsöffnung gelangt.

Aus FR-PS 14 31 376 ist zwar ein doppelkegelförmiger Gebläseluftkanal bei einem Sichter für Getreide bekannt. Hier tritt jedoch nahezu die gesamte Gebläseluft durch einen breiten Ringspalt zwischen dem unteren kegelförmigen Teil des Gebläseluftkanals und einem Auffangtrichter ein, so daß sich unter dem Verteilkegel das für die vorliegende Erfindung wesentliche Wirbelzentrum nicht ausbilden kann. Entsprechendes gilt für die Vorrichtung zum Sichten von Müll nach GB-PS 15 14 656. Dort wird durch Verbreiterung des Gebläseluftkanals und eine der Ablenkung der Gebläseluft dienende   •  Klappe eine walzenförmige Luftbewegung herbeigeführt, die der besseren Trennung von Leicht- und Schwergut dienen soll, jedoch nicht stark genug ist, auf dem Leichtgut haftendes feinkörniges Schwergut zu entfernen.

Die Vorrichtung zum Sichten von pneumatisch geförderten Gütern nach DE-PS 885 192 weist zwar unterhalb der Zuführung der als Sichtluft dienenden Förderluft regelbare Luftzutrittsöffnungen auf, doch sind diese unterhalb der Sichtluftzuführung angebracht; sie können daher nur vom Hauptluftstrom angesaugte Zusatzluft liefern, die nicht zur Ausbildung des Wirbelzentrums führt. Die Konstruktion der erfindungsgemäßen Vorrichtung wird hierdurch nicht nahegelegt. Ebensowenig findet sich im Stand der Technik ein Hinweis, daß durch eine Verwirbelungszone in einem Windsichter am Leichtgut haftende feine Schwergutteilchen von jenen entfernt werden können.

Die zweckmäßige Ausführungsform des Lufteintrittsringes gemäß Anspruch 2 ergibt ein leicht herstellbares Stellelement mit hoher statischer Tragfähigkeit des Innenringes.

Die Merkmale von Anspruch 3 und 4 sind insoweit vorteilhaft, als der sich einschnürende freie Fall der Schwerstoffe möglichst wenig an der Kegelwandung gebremst wird, damit die Schwerstoffe der am Austritt herrschenden starken Luftströmung gut widerstehen und nicht in den Schwebezustand kommen.

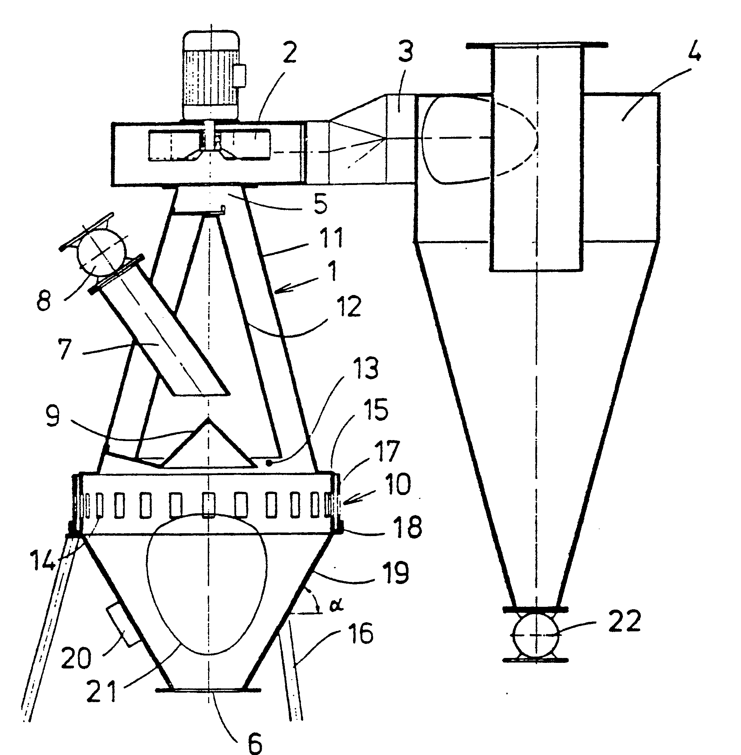

In der Zeichnung ist die Erfindung an einem Ausführungsbeispiel dargestellt. Sie zeigt eine Vorrichtung zum Sichten von Hausmüll im Längsschnitt. Im weiteren ist die Zeichnung erläutert.

Ein vertikaler Gebläseluftkanal 1 in der Form eines sich nach oben und nach unten verjüngenden Doppelkegels mündet mit dem oberen Ende in ein Gebläse 2, das über ein Rohr 3 an einem Zyklon 4 angeschlossen ist.

Das obere Ende des Gebläseluftkanals ist der Leichtgutaustrag 5, das untere der Schwergutaustrag 6 für gesichteten Hausmüll. Der dazwischen angeordnete Mülleintritt 7 ist ein mit einer Zellenradschleuse 8 versehenes, schräg abwärts geführtes Rohr, dessen Mündung auf die Spitze eines stumpfwinkligen Verteilkegels 9 zielt. Der Verteilkegel liegt etwa oberhalb des Doppelkegelstoßes, der als Belüftungsgitter 10 ausgebildet ist.

Ein entsprechend dem oberen Kegel 11 spitzwinkliger und zu diesem konzentrischer Luftleitkegel 12 bildet mit dem Verteilkegel 9 einen Beschickungsring 13 als engste Abstandsstelle der beiden Kegel 9 und 12.

Das Belüftungsgitter 10 ist ein Lufteintrittsring und besteht aus einem mit über den Umfang verteilten vertikalen Schlitzen 14 versehenen Blechring 15, der den oberen Teil der Vorrichtung statisch mit dem Gestell 16 verbindet und zum oberen Kegelmantel hin verkröpft ist. Der Blechring 15 ist von einem um eine Schlitzteilung in Umfangsrichtung verdrehbaren, mit entsprechenden Schlitzen versehenen losen Blechring 17 umgeben, der in einem umlaufenden Ringkragen 18 gelagert ist.

Der untere Kegel 19 ist im Vergleich zu dem unteren Kegel der von der Getreidesichtung her bekannten Vorrichtung verhältnismäßig schlank, das heißt, der Kegelwinkel α ist in dem Beispiel 55° gegenüber sonst 45°. Überdies ist der untere Kegel 19 mit einem Vibrator bzw. Klopfeinrichtung 20 versehen. Der Schwergutaustrag 6 ist als Lufteintrittsstelle offen.

Zur Beschreibung der Betriebsweise sei zunächst angenommen, daß die Luft fast ganz durch den Schwergutaustrag 6 hindurch hineinströmt. Schwergutteile, die vom Beschickungsring 13 aus herunterfallen, werden pneumatisch zuerst kaum abgebremst, weil die Strömungsgeschwindigkeit im Stoßbereich der beiden Kegel 11 und 19 klein ist. Die Teile werden auch an dem den Mengenstrom einschnürenden Kegelmantel wegen dessen Steilheit und wegen des Vibrators nur wenig behindert. Jedoch findet im Austragsquerschnitt 6 eine starke Bremsung an der entgegenströmenden Luft statt. Während eindeutige Schwergutteile diese Bremsung überwinden und ausgetragen werden, kommen indifferente Teile in den Schwebezustand und zur Aufwärtsbewegung in ein Wirbelzentrum 21 hinein. Die Wirbelrichtung ist räumlich, das heißt, sie liegt sowohl in der Zeichenebene als auch senkrecht dazu. Das Wirbelzentrum ist also in Anschmiegung an die Unterseite des Verteilkegels 9 im wesentlichen eiförmig.

Die indifferenten Teilchen treffen in dem Wirbelzentrum aufeinander und werden, wenn sie aus verschiedenartigem Material bestehen, aufgeschlossen. So z. B. haften kleine Steinchen und Glasstückchen bei Hausmüll gern an faserigem Material an. Werden solche indifferenten Gebilde in dem Wirbelzentrum aufgelöst, so hat das die Wirkung, daß das faserige Material den Weg zum Leichgutaustrag 5 und die mineralischen Teilchen den Weg nach unten finden. So separierte Feininertanteile z. B. kleine Glassplitter passieren die Öffnung 6, besonders dann, wenn sie sich im Randbereich befinden.

Diese bei bekannten Sichtern nicht gegebene Aufschließmöglichkeit von heterogenen kleinen Müllteilchen wird durch das Wirbelzentrum 21 erreicht. Mit dem Lufteintrittsring 10 wird die Luftgeschwindigkeit in der Öffnung 6 und damit die Ausbildung des Wirbelzentrums 21 gesteuert. Bei zu geringer Luftgeschwindigkeit in der Öffnung 6 kommt das Wirbelzentrum nicht zustande; bei entsprechend zu starker Luftgeschwindigkeit wird das Wirbelzentrum zerstört. Die indifferenten Teilchen gelangen dann unzerlegt, also geradewegs zum Leichtgutaustrag 5.

## Patentansprüche

1. Vorrichtung zum Sichten von Hausmüll, mit einem vertikalen Gebläseluftkanal (1) mit einer an seinem unteren Ende befindlichen, den Sichtlufteinlaß bildenden Schwergutaustragsöffnung (6), einer an seinem oberen Ende befindlichen Leichtgutaustragsöffnung (5) und einem dazwischen liegenden, über einem zentral angeordneten, stumpfwinkligen Verteilkegel (9) ausmündenden Mülleintritt (7), dadurch gekennzeichnet, daß der Gebläseluftkanal (1) eine kegelförmige obere Wand (11), eine trichterförmige untere Wand (19) und einen dazwischen angeordneten, ringsum mit während des Betriebes einstellbaren Einlaßöffnungen für Zusatzluft versehenen Einlaßring (10) aufweist, daß der Verteilkegel (9) etwas oberhalb des Einlaßringes (10) angeordnet ist, und daß über dem Verteilkegel (9) und koaxial innerhalb der oberen Wand (11) ein spitzwinkliger, den Mülleintritt (7) aufnehmender Luftleitkegel (12) angeordnet ist, der mit dem Verteilkegel (9) einen ringförmigen Beschickungsspalt (13) begrenzt.

2. Vorrichtung nach Anspruch 1, dadurch gekennzeichnet, daß der Einlaßring (10) für die Zusatzluft aus einem gehäusefesten Blechring (15) und einem diesen umgebenden, in Umfangsrichtung verdrehbaren Blechring (17) gebildet ist, welche Blechringe (15, 17) über den Umfang verteilt vertikale Schlitze (14) aufweisen.

3. Vorrichtung nach Anspruch 1 oder 2, dadurch gekennzeichnet, daß die untere Wand (19) des Gebläseluftkanals (1) einen Kegelwinkel (α) von 50° bis 60° aufweist.

4. Vorrichtung nach Anspruch 3, dadurch gekennzeichnet, daß die untere Wand (19) mit einem Vibrator oder einer Klopfeinrichtung (20) versehen ist.

## Claims

1. Device for the sifting of household refuse, with a vertical air blast channel (1) with a heavy material discharge opening (6) situated at its lower end and forming the sifting air inlet, a light material discharge opening (5) situated at its upper end and a refuse inlet (7) lying therebetween, opening out over a centrally arranged, obtuse-angled distribution cone (9), characterized in that the air blast channel (1) has a conical upper wall (11), a funnel-shaped lower wall (19) and an inlet ring (10) arranged therebetween, which is provided all around with inlet openings for additional air, which openings are able to be adjusted during operation, that the distribution cone (9) is arranged somewhat above the inlet ring (10), and that over the distribution cone (9) and coaxially within the upper wall (11) an acute-angled air-directing cone (12) is arranged, which receives the refuse inlet (7) and which with the distribution cone (9) defines an annular charging gap (13).

2. Device according to Claim 1, characterized in that the inlet ring (10) for the additional air is formed from a sheet metal ring (15) which is fixed with the housing, and from a sheet metal ring (17) which surrounds the former ring and is able to be twisted in circumferential direction, which sheet metal rings (15, 17) have vertical slits (14) distributed over the circumference.

3. Device according to Claim 1 or 2, characterized in that the lower wall (19) of the air blast channel (1) has a taper angle (α) of 50° to 60°

4. Device according to Claim 3, characterized in that the lower wall (19) is provided with a vibrator or with a knocking arrangement (20).

**Revendications**

1. Dispositif pour le triage d'ordures ménagères, comportant un canal d'air soufflé (1) vertical comportant une ouverture d'évacuation de produits lourds (6) formant l'entrée d'air de triage et se trouvant à son extrémité inférieure, une ouverture d'évacuation de produits légers (5) se trouvant à son extrémité supérieure et une entrée (7) d'ordures entre elles débouchant au-dessus d'un cône de séparation (9) à angle obtus disposé de façon centrale, caractérisé en ce que le canal d'air soufflé (1) présente une paroi supérieure conique (11), une paroi inférieure en forme d'entonnoir (19) et un anneau d'entrée (10) entre lesdites parois, muni annulairement d'orifices d'entrée pour de l'air supplémentaire réglables en service, en ce que le cône de séparation (9) est disposé quelque peu au-dessus de l'anneau d'entrée (10), et en ce que, au-dessus du cône de séparation (9) et coaxialement à l'intérieur de la paroi supérieure (11), est disposé un cône de guidage d'air (12) à angle aigu recevant l'entrée d'ordures (7), lequel cône définit, avec le cône de séparation (9), un espace de chargement annulaire (13).

2. Dispositif selon la revendication 1, caractérisé en ce que l'anneau d'entrée (10) pour l'air supplémentaire est formé d'une tôle annulaire (15) fixée au bâti et d'une tôle annulaire (17) entourant celle-ci et pouvant tourner en direction périphérique, lesquelles tôles annulaires (15, 17) présentent, sur leur périphérie, des fentes verticales espacées (14).

3. Dispositif selon la revendication 1 ou 2, caractérisé en ce que la paroi inférieure (19) du canal d'air soufflé (1) présente un angle de cône (α) de 50° à 60°.

4. Dispositif selon la revendication 3, caractérisé en ce que la paroi inférieure (19) est munie d'un vibreur ou d'un tasseur (20).